# FASCICULE DE BREVET EUROPEEN

(11) **EP 1 249 725 B1**
(45) Date de publication et mention de la délivrance du brevet: **25.10.2006**
(21) Numéro de dépôt: 02290831.3
(22) Date de dépôt: 04.04.2002
(51) Int. Cl.: G02B 6/44

(54) **Câble à fibres optiques imposant aux fibres une trajectoire hélicoidale par torsion du tube**
Glasfaserkabel mit schraubenförmig angeordneten optischen Fasern, welche durch das Verdrehen des Hüllrohrs hergestellt werden
Optical fiber cable forcing the fibers into a helical path by torsion of the tube

(30) Priorité: 09.04.2001 FR 0104790
(43) Date de publication de la demande: 16.10.2002
(73) Titulaire: Draka Comteq B.V., 1021 JZ Amsterdam (NL)
(72) Inventeur: Pouilly, Serge, 40468 Dusseldorf (DE); Prunayre, Hubert, Résidence des Sirènes II, 06210 Mandelieu la Napoule (FR); Lavenne, Alain, 62100 Calais (FR); Bourget, Vincent, 78160 Marly le Roi (FR); Avrons, Alain, 62100 Calais (FR)
(74) Mandataire: Blokland, Arie

(56) Documents cités:
- DE-A- 3 836 341
- GB-A- 2 110 414
- GB-A- 2 138 965
- US-A- 4 078 853
- US-A- 4 214 430
- US-A- 4 798 443
- US-A- 5 332 165

## Description

La présente invention concerne un procédé de fabrication d'un câble à fibres optiques et une installation pour la mise en oeuvre de ce procédé.

Les câbles à fibres optiques, appelés par la suite câbles optiques, sont susceptibles de présenter des structures de différents types.

Ainsi, par exemple, selon un des types de structures désigné habituellement sous le nom commercial FLEXTUBE ®, le câble optique comprend des tubes en matériau synthétique, dans lesquels sont logées des fibres optiques, assemblés entre eux en hélice ou en SZ. L'assemblage de tubes est revêtu d'une gaine délimitée par une paroi dans laquelle sont noyés des porteurs filiformes. Dans ce type de structures, les tubes contenant les fibres optiques, relativement fins et souples, enserrent les fibres optiques qu'ils contiennent en empêchant pratiquement tout déplacement relatif entre les fibres optiques et les tubes qui les contiennent,

Dans un réseau de fibres optiques, les câbles optiques sont, dans la plupart des cas, logés dans des tubes de réseau, généralement en matériau synthétique extrudé. Pour enfiler un câble de fibres optiques dans un tube de réseau, on utilise différents procédés connus notamment des procédés de soufflage et de portage. Au cours de ces procédés, les composants du câble subissent des allongements variables, la gaine du câble ayant tendance à s'allonger davantage que les fibres optiques de ce câble. Ces disparités d'allongement peuvent endommager les fibres optiques car les capacités d'étirement de ces dernières sont beaucoup plus réduites que celles de la gaine en matériau synthétique.

L'invention a pour but de remédier à cet inconvénient en proposant un procédé de fabrication et une installation pour la mise en oeuvre de ce procédé de fabrication d'un câble optique susceptible de s'allonger sensiblement notamment lors de son installation dans un réseau de fibres optiques, sans pour autant endommager les fibres optiques.

US 5531064 décrit un câble à fibres optiques comprenant au moins un tube dans lequel sont logés des rubans à fibres optiques. Ces rubans sont arrangés en groupe ayant un axe commun. Ce groupe de rubans à fibres optiques présente une torsion longitudinale alternante autour de cet axe central. Les tubes de ce câble sont disposés selon un assemblage en hélice ou en SZ et présentent une torsion longitudinale au pas identique du groupe de rubans à fibres optiques logés dans le tube.

US 5332165 décrit une méthode pour installer un câble de transmission. Un câble de transmission est enroulé autour d'un cable de renfort. La bobine du câble de transmission se déplace le long du cable de renfort tandis que le câble est tiré de la bobine qui n'est pas en rotation, le câble de renfort passant par le centre de la bobine du câble de transmission.

DE 3836341 décrit un procédé de fabrication d'un câble sous-marin comprenant une armure, dans lequel le câble sous-marin et l'armure sont tirés individuellement de stockages séparés. L'armure est passée par le centre d'un stockage enroulé du câble sous-marin de sorte que, quand le câble sous-marin est tiré du stockage, le câble sous-marin est déposé autour de l'armure.

A cet effet, la présente invention a pour objet un procédé et une installation de fabrication d'un câble à fibres optiques selon les revendications 1 et 2.

Suivant des caractéristiques de différents modes de réalisation de cette installation :
- le tube est enroulé sur la bobine de stockage autour d'un axe géométrique, appelé axe de la bobine de stockage, les moyens de déroulement du tube comprenant des moyens de guidage montés rotatifs autour d'un axe géométrique coïncidant sensiblement avec l'axe de la bobine de stockage ;
- les moyens de guidage comprennent un disque mobile monté rotatif autour de l'axe de la bobine de stockage, à une extrémité de cette bobine de stockage, de façon à former une joue rotative de la bobine de stockage, le tube prenant appui sur le bord périphérique du disque mobile ;
- l'installation comprend un disque fixe muni d'un axe de révolution, coïncidant sensiblement avec l'axe de la bobine de stockage, et de moyens de frottement, agencés sur le bord périphérique du disque fixe, destinés à coopérer avec une partie du tube s'étendant en aval du disque mobile par rapport au sens de déroulement de ce tube, pour freiner la rotation du disque mobile ;
- les moyens de frottement comprennent des poils ou fibres radiaux ;
- les moyens de guidage comprennent un disque de débobinage monté rotatif autour d'un axe coïncidant sensiblement avec l'axe de la bobine de stockage portant un bras de débobinage s'étendant longitudinalement sensiblement parallèlement à l'axe de la bobine de stockage, décalé radialement par rapport à l'axe de cette bobine de stockage, de façon que ce bras de débobinage tourne autour de la bobine de stockage ;
- un cylindre de guidage est monté rotatif sur le bras de débobinage, le tube prenant appui sur la surface périphérique de ce cylindre de guidage ;
- le disque de débobinage porte des moyens de renvoi du tube depuis le bras de débobinage vers un orifice de passage du tube ménagé dans le disque de débobinage, cet orifice de passage étant sensiblement aligné avec l'axe de la bobine de stockage.

L'invention sera mieux comprise à la lecture de la description qui va suivre, donnée uniquement à titre d'exemple et faite en se référant aux dessins annexés dans lesquels :
- la figure 1 est une vue en coupe transversale d'un câble à fibres optiques selon l'invention ;
- la figure 2 est une vue suivant la flèche 2 de la figure 1, avec un arrachement, d'un tube dans lequel sont logées des fibres optiques ;
- la figure 3 est une vue schématique d'un premier mode de réalisation d'une installation pour la mise en oeuvre du procédé selon l'invention ;
- la figure 4 est une vue schématique d'un second mode de réalisation d'une installation pour la mise en oeuvre du procédé selon l'invention.

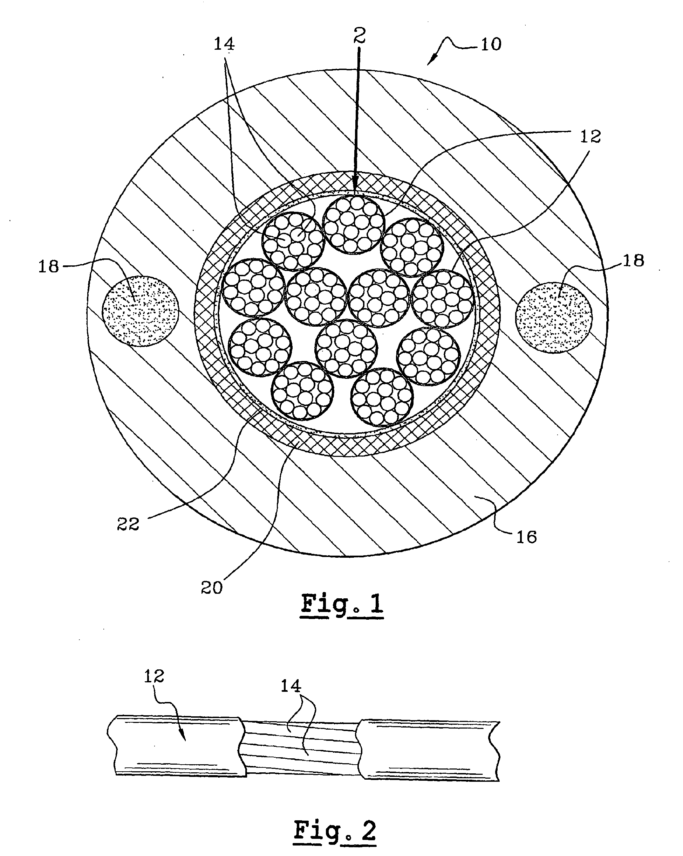

On a représenté sur la figure 1 un câble à fibres optiques selon l'invention, désigné par la référence générale 10.

Ce câble optique 10 comprend un assemblage de tubes souples 12 dans chacun desquels est logé un faisceau de fibres optiques classiques 14. Chaque tube 12 comprend par exemple une douzaine de fibres optiques 14. Toutefois, le nombre de fibres optiques 14 peut être inférieur ou supérieur à douze.

Dans l'exemple illustré, le câble optique 10 comprend douze tubes 12. Toutefois, le nombre de tubes 12 peut être différent, par exemple compris entre sept et douze.

L'assemblage de tubes 12 est revêtu d'une gaine 16. De préférence, les tubes 12 s'étendent dans la gaine 16 suivant un assemblage classique en hélice ou en SZ.

Des éléments filiformes formant renforts de traction, appelés par la suite porteurs 18, sont agencés à la périphérie de l'assemblage de tubes 12. De préférence, le câble optique 10 comprend deux porteurs 18, diamétralement opposés, noyés dans la paroi délimitant la gaine 16. La structure et l'assemblage des porteurs 18 dans la gaine 16 sont classiques.

De préférence, le câble optique 10 comprend des mèches de renfort mécanique 20, par exemple en aramide, s'étendant radialement entre les tubes 12 et la gaine 16 suivant un assemblage annulaire, par exemple en hélice.

De préférence également, le câble optique 10 comprend des éléments d'étanchéité classiques.

De tels éléments d'étanchéité peuvent comprendre un ruban d'étanchéité 22 s'étendant radialement entre les tubes 12 et la gaine 16, plus particulièrement entre les tubes 12 et l'assemblage de mèches de renfort 20, suivant un assemblage classique annulaire.

De façon classique, la gaine 16 est fabriquée dans un matériau synthétique qui est chauffé et extrudé autour des tubes 12, ces derniers étant également fabriqués dans un matériau synthétique. On notera que la paroi des tubes 12 est relativement fine comme cela est le cas habituellement pour les tubes 12 d'un câble optique du type à porteurs agencés à la périphérie de l'assemblage de tubes.

Selon l'invention, dans chacun des tubes 12, les fibres optiques 14 s'étendent longitudinalement en hélice comme cela est représenté sur la figure 2. Par ailleurs, chacun des tubes 12 présente une torsion longitudinale.

Lors d'une traction exercée sur le câble 10 ayant tendance à allonger les composants de ce dernier, notamment la gaine 16 du câble 10, le pas de l'agencement en hélice des fibres optiques 14 dans chacun des tubes 12 à tendance à augmenter de façon à compenser l'allongement du câble 10, sans pour autant provoquer une traction excessive sur les fibres optiques 14 susceptible de les endommager. De même, la torsion longitudinale des tubes 12 à tendance à se réduire lors de l'allongement du câble 10, en suivant l'augmentation du pas de l'agencement en hélice des fibres optiques 14, de façon à compenser l'allongement de ce câble 10. Ceci autorise donc l'allongement du câble 10, notamment lors de son montage dans un tube de réseau de fibres optiques, sans pour autant risquer d'endommager les fibres optiques 14 dont les capacités d'étirement sont très réduites par rapport à celles notamment de la gaine 16 en matériau synthétique.

De même cet agencement en hélice des fibres optiques 14 permet de limiter les déplacements de ces fibres 14 occasionnés par la contraction du câble 10 notamment à basse température.

Pour fabriquer le câble 10, on fabrique initialement les tubes 12 contenant les fibres optiques 14 conformément à un procédé classique. Dans chaque tube 12, les fibres optiques 14 s'étendent sensiblement parallèlement entre elles. Le tube 12 est par exemple agencé autour des fibres optiques 14 par extrusion.

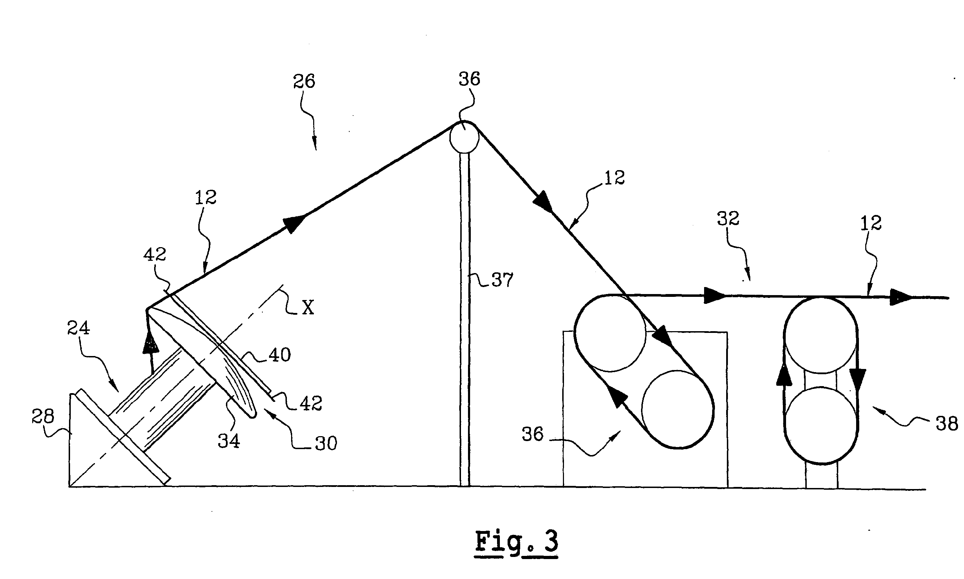

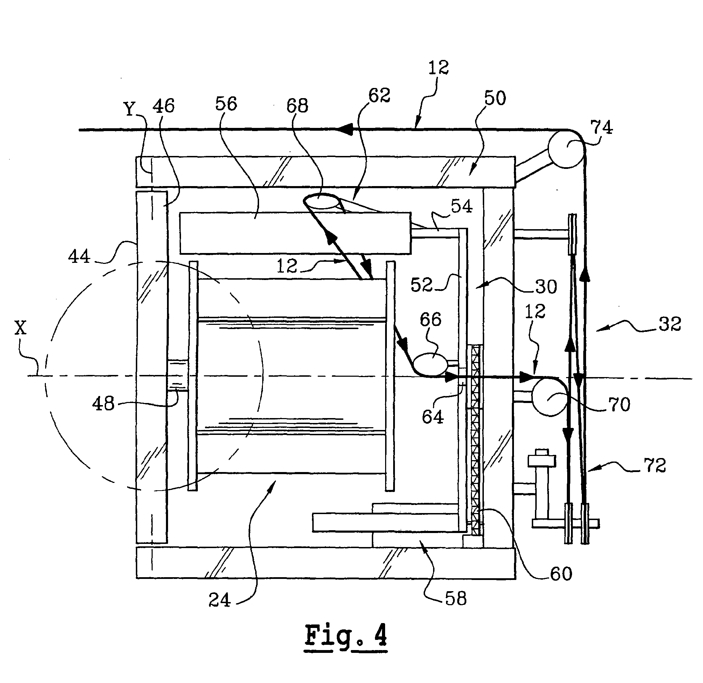

Préalablement à leur assemblage pour former le câble 10, les tubes 12 sont enroulés sur des bobines de stockage 24 telles que celle représentée sur les figures 3 et 4.

Chaque tube 12, muni des fibres optiques 14, est approvisionné vers une filière classique de fabrication du câble 10 depuis sa bobine de stockage 24 sur laquelle il est enroulé. Selon l'invention, le tube 12 est approvisionné vers la filière de fabrication du câble 10 en déroulant le tube 12 de la bobine 24 alors que cette bobine 24 est immobilisée. Cette opération confère au tube 12 une torsion longitudinale imposant aux fibres optiques 14 qu'il contient un trajet en hélice de pas sensiblement égal à la longueur d'une spire de tube 12 enroulée sur la bobine 24.

On a représenté sur la figure 3 une installation 26, selon un premier mode de réalisation de l'invention, pour l'approvisionnement d'un tube 12 contenant des fibres optiques 14 vers une filière classique de fabrication du câble 10.

Sur cette figure 3, on a représenté le tube 12 dont une partie est enroulée sur la bobine de stockage 24 autour d'un axe géométrique X appelé par la suite axe de la bobine.

La bobine de stockage 24 est immobilisée, notamment pour l'empêcher de tourner autour de son axe X, à l'aide de moyens classiques, par exemple par accrochage sur un support fixe 28.

L'installation 26 comprend des moyens de déroulement du tube 12 porté la par la bobine de stockage 24 comportant, d'une part, des moyens 30 de guidage du tube 12 montés rotatifs autour d'un axe géométrique coïncidant sensiblement avec l'axe X de la bobine de stockage 24 et, d'autre part, des moyens classiques 32 de traction et de mise sous tension du tube 12.

Ces moyens de guidage 30 comprennent un disque mobile 34 monté rotatif autour de l'axe X de la bobine de stockage 24, à une extrémité de cette bobine 24. Ainsi, le disque mobile 34 forme une joue rotative de la bobine 24 sur le bord périphérique de laquelle le tube 12 prend appui, comme cela est représenté sur la figure 3.

Le tube 12 s'étend depuis la bobine de stockage 24 jusqu'à une poulie 36, portée par un mât 37, en prenant appui sur le disque mobile 34. Cette poulie 36 renvoie le tube 12 vers les moyens 32 de traction et de mise sous tension de ce tube 12. Ces moyens 32 comprennent par exemple un ensemble 36 de cabestans d'entraînement ainsi qu'un ensemble 38 formant moufle.

Pour freiner la rotation du disque mobile 34, et ainsi limiter la vitesse de rotation de ce dernier, l'installation 26 comprend également un disque fixe 40 muni d'un axe de révolution coïncidant sensiblement avec l'axe de la bobine de stockage 24. Le disque fixe 40 comporte des moyens de frottement 42, agencés sur le bord périphérique de ce disque fixe 40, destinés à coopérer avec une partie du tube 12 s'étendant en aval du disque mobile 34 par rapport au sens de déroulement de ce tube 12 (indiqué par des flèches sur la figure 3).

Les moyens de frottement 42 comprennent, par exemple, des poils ou fibres radiaux.

On a représenté sur la figure 4 une installation 26 d'approvisionnement de tube 12, selon un second mode de réalisation de l'invention. Sur cette figure 4, les éléments analogues à ceux de la figure 3 sont désignés par des références identiques.

Dans ce cas, la bobine de stockage 24 est immobilisée par accrochage sur une potence 44. Cette dernière comporte un montant vertical 46 et une traverse horizontale 48 portant la bobine 24. La traverse 48 s'étend sensiblement de façon coaxiale à l'axe X de la bobine 24.

Le montant 46 est monté pivotant sur un bâti 50, autour d'un axe géométrique Y, entre une position de chargement de la bobine 24 sur la traverse 48, telle que représentée en traits mixtes sur la figure 4, et une position de déroulement du tube 12, telle que représentée en trait plein sur cette figure 4.

Les moyens de guidage 30 de l'installation 26 selon le second mode de réalisation de l'invention comprennent un disque 52 de débobinage du tube 12 monté rotatif autour d'un axe coïncidant sensiblement avec l'axe X de la bobine de stockage 24. Ce disque 52 porte un bras 54 de débobinage du tube 12 s'étendant longitudinalement sensiblement parallèlement à l'axe X de la bobine de stockage 24. Le bras de débobinage 54 est décalé radialement par rapport à l'axe X de la bobine de stockage 24, de façon que ce bras de débobinage 54 tourne autour de la bobine de stockage 24.

De préférence, un cylindre 56 de guidage du tube 12 est monté rotatif sur le bras de débobinage 54. Le tube 12 prend appui sur la surface périphérique de ce cylindre de guidage 56.

Le disque de débobinage 52 est entraîné à l'aide de moyens motorisés classiques dont on a représenté sur la figure 4 un moteur 58 d'entraînement et une courroie 60 de couplage de ce moteur 58 avec le disque de débobinage 52.

Le disque de débobinage 52 porte des moyens 62 de renvoi du tube 12 depuis le bras de débobinage 54 et le cylindre de guidage 56 vers un orifice 64 de passage du tube 12 ménagé dans le disque de débobinage 52. Cet orifice de passage 64 est sensiblement aligné avec l'axe X de la bobine de stockage 24.

Les moyens de guidage 62 comprennent, par exemple, deux poulies de renvoi 66, 68 portées respectivement par le disque de débobinage 52 et le bras de guidage 54.

Le tube 12 s'étend, à travers l'orifice 64, depuis la poulie de renvoi 66 portée par le disque de débobinage 52 jusqu'à une première poulie 70 portée par le bâti 50. Cette poulie 70 renvoie le tube 12 vers les moyens 32 de traction et de mise sous tension de ce tube 12. Ces moyens 32 comprennent par exemple un ensemble 72 formant moufle disposé en amont d'une seconde poulie de renvoi 74 portée par le bâti 50, par rapport au sens de déroulement du tube 12 indiqué par des flèches sur la figure 4.

Parmi les avantages de l'invention, on notera que le procédé de l'invention permet d'imprimer au tube 12 une torsion configurant en hélice les fibres optiques 14 contenues dans ce tube 12. Ainsi, lors d'une traction exercée sur le câble 10 ayant tendance à allonger les composants de ce dernier, notamment la gaine 16 par étirement de celle-ci, l'hélice formée par les fibres optiques 14 se déforme par augmentation de son pas de façon à s'allonger conjointement avec la gaine du câble en préservant les fibres optiques 14 de tout étirement dommageable.

Bien entendu, l'invention peut s'appliquer à la fabrication de câble à fibres optiques de types variés autres que ceux désignés par le nom commercial FLEXTUBE ®.

## Revendications

1. Procédé de fabrication d'un câble (10) à fibres optiques (14) du type comprenant au moins un tube (12) dans lequel sont logées des fibres optiques (14), ledit tube (12) muni des fibres optiques étant disposé selon un assemblage en hélice ou en SZ, et présentant en outre une torsion longitudinale, lesdites fibres optiques étant logées dans ledit tube s'étendant longitudinalement en hélice dans ledit tube (12), ledit procédé étant du type dans lequel un tube (12) muni des fibres optiques (14) est enroulé sur une bobine de stockage (24) et ledit tube (12) muni des fibres optiques (14) étant enroulé sur ladite bobine de stockage est approvisionné vers une filière de fabrication du câble (10) depuis ladite bobine de stockage (24) en déroulant ledit tube (12) muni des fibres optiques (14) de ladite bobine de stockage (24), ledit procédé étant **caractérisé en ce que** ledit tube (12) muni des fibres optiques (14) est déroulé de ladite bobine de stockage (24) à une extrémité de ladite bobine de stockage (24) alors que ladite bobine de stockage (24) est immobilisée, de façon qu'il est conféré audit tube (12) une torsion longitudinale imposant aux fibres optiques (14) qu'il contient un trajet en hélice de pas sensiblement égal à la longueur d'une spire dudit tube (12) muni des fibres optiques (14) étant enroulé sur ladite bobine de stockage (24).

2. Installation (26) pour la mise en oeuvre du procédé de fabrication d'un câble (10) à fibres optiques (14) du type comprenant au moins un tube (12) dans lequel sont logées des fibres optiques (14), ledit tube (12) muni des fibres optiques (14) étant disposé selon un assemblage en hélice ou en SZ, et présentant en outre une torsion longitudinale, lesdites fibres optiques (14) étant logées dans ledit tube (12) s'étendant longitudinalement en hélice dans ledit tube (12), ledit procédé étant du type dans lequel un tube (12) muni des fibres optiques (14) est enroulé sur une bobine de stockage (24) et ledit tube (12) muni des fibres optiques (14) étant enroulé sur ladite bobine de stockage est approvisionné vers une filière de fabrication du câble (10) depuis ladite bobine de stockage (24) en déroulant ledit tube (12) muni des fibres optiques (14) de ladite bobine de stockage (24), ladite installation étant **caractérisée en ce qu'**elle comprend des moyens (28 ; 44) d'immobilisation de ladite bobine de stockage (24) pour empêcher ladite bobine de stockage (24) de tourner autour de son axe et des moyens (30 ; 32) de déroulement dudit tube (12) muni des fibres optiques (14) étant enroulé sur ladite bobine de stockage (24) à une extrémité de ladite bobine de stockage (24) pour guider ledit tube (12) muni des fibres optiques (14) vers ladite filière (10) de façon qu'il est conféré au tube (12) une torsion longitudinale imposant aux dites fibres optiques (14) qu'il contient un trajet en hélice de pas sensiblement égal à la longueur d'une spire dudit tube (12) muni des fibres optiques (14) étant enroulée sur ladite bobine de stockage (24).

3. Installation (26) selon la revendication 2, ledit tube (12) muni des fibres optiques étant enroulé sur ladite bobine de stockage (24) autour d'un axe (X) géométrique, appelé axe (X) de ladite bobine de stockage (24), lesdits moyens (30; 32) de déroulement dudit tube (12) comprenant des moyens de guidage (30) montés rotatifs autour d'un axe géométrique coïncidant sensiblement avec ledit axe (X) de ladite bobine de stockage (24).

4. Installation (26) selon la revendication 3, lesdits moyens de guidage (30) comprenant un disque mobile (34) monté rotatif autour dudit axe (X) de ladite bobine de stockage (24), à une extrémité de ladite bobine de stockage (24), de façon à former une joue rotative de ladite bobine de stockage (24), ledit tube (12) prenant appui sur le bord périphérique du dit disque mobile (34).

5. Installation (26) selon la revendication 4, comprenant un disque fixe (40) muni d'un axe de révolution, coïncidant sensiblement avec ledit axe (X) de ladite bobine de stockage (24), et de moyens de frottement (42) étant agencés sur le bord périphérique d'une disque fixe (40) et étant destinés à coopérer avec une partie du dit tube (12) s'étendant en aval du dit disque mobile (34) par rapport au sens de déroulement du dit tube (12), pour freiner la rotation du dit disque mobile (34).

6. Installation (26) selon la revendication 5, lesdits moyens de frottement (42) comprenant des poils ou fibres radiaux.

7. Installation (26) selon la revendication 3, lesdits moyens de guidage (30) comprenant un disque de débobinage (52) monté rotatif autour d'un axe coïncidant sensiblement avec ledit axe (X) de ladite bobine de stockage (24) portant un bras de débobinage (54) s'étendant longitudinalement sensiblement parallèlement audit axe (X) de ladite bobine de stockage (24), étant décalé radialement par rapport à l'axe (X) de ladite bobine de stockage (24), de façon que ledit bras de débobinage (54) tourne autour de ladite bobine de stockage (24).

8. Installation (26) selon la revendication 7, un cylindre de guidage (56) étant monté rotatif sur ledit bras de débobinage (54), ledit tube (12) muni des fibres optiques (14) prenant appui sur la surface périphérique dudit cylindre de guidage (56).

9. Installation (26) selon la revendication 7 ou 8, ledit disque de débobinage (52) portant des moyens (66, 68) de renvoi dudit tube (12) muni des fibres optiques (14) depuis ledit bras de débobinage (54) vers un orifice (64) de passage dudit tube (12) muni des fibres optiques (14) étant ménagé dans ledit disque de débobinage (52), ledit orifice de passage (64) étant sensiblement aligné avec l'axe (X) de la bobine de stockage (24).

## Claims

1. Method of producing an optical fibre (14) cable (10) of the type comprising at least one tube (12) in which there are accommodated optical fibres (14), said tube (12) provided with optical fibres being disposed in a helical or SZ lay and in addition having a longitudinal twist, said optical fibres being accommodated in said tube so as to extend longitudinally on a helical course in said tube (12), said method being of the type wherein a tube (12) provided with optical fibres (14) is wound on a storage reel (24) and said tube (12) provided with optical fibres (14) and wound on said storage reel is fed to a die for producing the cable (10) from said storage reel (24) by unwinding said tube (12) provided with optical fibres (14) from said storage reel (24), said method being **characterised in that** said tube (12) provided with optical fibres (14) is unwound from said storage reel (24) at one end of said storage reel (24) whilst said storage reel (24) is held stationary so that said tube (12) is provided with a longitudinal twist imposing on the optical fibres (14) contained in the tube a helical path having a pitch that is substantially equal to the length of one turn of said tube (12) provided with optical fibres (14) when wound on said storage reel (24).

2. Installation (26) for carrying out the method of producing an optical fibre (14) cable (10) of the type comprising at least one tube (12) in which there are accommodated optical fibres (14), said tube (12) provided with optical fibres (14) being disposed in a helical or SZ lay and in addition having a longitudinal twist, said optical fibres (14) being accommodated in said tube (12) so as to extend longitudinally on a helical course in said tube (12), said method being of the type wherein a tube (12) provided with optical fibres (14) is wound on a storage reel (24) and said tube (12) provided with optical fibres (14) and wound on said storage reel is fed to a die for producing the cable (10) from said storage reel (24) by unwinding said tube (12) provided with optical fibres (14) from said storage reel (24), said installation being **characterised in that** it comprises means (28; 44) for holding said storage reel (24) stationary in order to prevent said storage reel (24) from turning on its axis and means (30; 32) for unwinding said tube (12) provided with optical fibres (14) and wound on said storage reel (24) at one end of said storage reel (24) in order to guide said tube (12) provided with optical fibres (14) towards said die (10) so that the tube (12) is provided with a longitudinal twist imposing on said optical fibres (14) contained in the tube a helical path having a pitch that is substantially equal to the length of one turn of said tube (12) provided with optical fibres (14) when wound on said storage reel (24).

3. Installation (26) according to claim 2, said tube (12) provided with optical fibres being wound on said storage reel (24) around a geometric axis (X) referred to as the axis (X) of said storage reel (24), said means (30; 32) for unwinding said tube (12) comprising guide means (30) mounted so as to be rotatable about a geometric axis substantially coinciding with said axis (X) of said storage reel (24).

4. Installation (26) according to claim 3, said guide means (30) comprising a moving disc (34) mounted at one end of said storage reel (24) so as to be rotatable about said axis (X) of said storage reel (24) and so as to form a rotatable flange of said storage reel (24), said tube (12) bearing against the peripheral edge of said moving disc (34).

5. Installation (26) according to claim 4, comprising a fixed disc (40) having its axis of revolution substantially coinciding with said axis (X) of said storage reel (24) and friction means (42) provided on the peripheral edge of a fixed disc (40) and intended to co-operate with a portion of said tube (12) extending downstream from said moving disc (34) in relation to the unwinding direction of said tube (12) in order to brake the rotation of said moving disc (34).

6. Installation (26) according to claim 5, said friction means (42) comprising radial fibres or bristles.

7. Installation (26) according to claim 3, said guide means (30) comprising a winding-off disc (52) mounted so as to be rotatable about an axis substantially coinciding with said axis (X) of said storage reel (24) and carrying a winding-off arm (54) extending longitudinally substantially parallel to said axis (X) of said storage reel (24) and being radially offset with respect to the axis (X) of said storage reel (24), the arrangement being such that said winding-off arm (54) rotates around said storage reel (24).

8. Installation (26) according to claim 7, a guide cylinder (56) being rotatably mounted on said winding-off arm (54), said tube (12) provided with optical fibres (14) bearing against the peripheral surface of said guide cylinder (56).

9. Installation (26) according to claim 7 or 8, said winding-off disc (52) carrying means (66, 68) for steering said tube (12) provided with optical fibres (14) from said winding-off arm (54) towards an orifice (64) provided in said winding-off disc (52) for the passage of said tube (12) provided with optical fibres (14), said passage orifice (64) being substantially aligned with the axis (X) of the storage reel (24).

## Patentansprüche

1. Verfahren zur Herstellung eines Kabels (10) mit Lichtleitfasern (14), von der Art, die mindestens ein Schlauch (12) aufweist, in dem Lichtleitfasern (14) angeordnet sind, wobei der die Lichtleitfasern enthaltende Schlauch (12) in einer schraubenlinienförmigen oder SZ-förmigen Anordnung angeordnet ist und außerdem eine Längsverwindung aufweist, wobei die im Schlauch angeordneten Lichtleitfasern sich in Längsrichtung schraubenlinienförmig im Schlauch (12) erstrecken, wobei das Verfahren von der Art ist, bei der ein die Lichtleitfasern (14) enthaltender Schlauch (12) auf eine Speichertrommel (24) aufgewickelt wird, und der die Lichtleitfasern (14) enthaltende und auf die Speichertrommel aufgewickelte Schlauch (12) ausgehend von der Speichertrommel (24) an einen Ziehstein zur Herstellung des Kabels (10) geliefert wird, indem der die Lichtleitfasern (14) enthaltende Schlauch (12) von der Speichertrommel (24) abgewickelt wird, wobei das Verfahren **dadurch gekennzeichnet ist, dass** der die Lichtleitfasern (14) enthaltende Schlauch (12) an einem Ende der Speichertrommel (24) von der Speichertrommel (24) abgewickelt wird, während die Speichertrommel (24) unbeweglich ist, so dass dem Schlauch (12) eine Längsverwindung verliehen wird, die den in ihm enthaltenen Lichtleitfasern (14) eine schraubenlinienförmige Strecke aufzwingt, deren Steigung im Wesentlichen gleich der Länge einer Windung des die Lichtleitfasern (14) enthaltenden, auf die Speichertrommel (24) aufgewickelten Schlauchs (12) ist.

2. Anlage (26) zur Anwendung des Verfahrens zur Herstellung eines Kabels (10) mit Lichtleitfasern (14), von der Art, die mindestens einen Schlauch (12) aufweist, in dem Lichtleitfasern (14) angeordnet sind, wobei der die Lichtleitfasern enthaltende Schlauch (12) in einer schraubenlinienförmigen oder SZ-förmigen Anordnung angeordnet ist und außerdem eine Längsverwindung aufweist, wobei die im Schlauch (12) angeordneten Lichtleitfasern (14) sich in Längsrichtung schraubenlinienförmig im Schlauch (12) erstrecken, wobei das Verfahren von der Art ist, bei der ein die Lichtleitfasern (14) enthaltender Schlauch (12) auf eine Speichertrommel (24) aufgewickelt wird, und der die Lichtleitfasern (14) enthaltende und auf die Speichertrommel aufgewickelte Schlauch (12) ausgehend von der Speichertrommel (24) an einen Ziehstein zur Herstellung des Kabels (10) geliefert wird, indem der die Lichtleitfasern (14) enthaltende Schlauch (12) von der Speichertrommel (24) abgewickelt wird, wobei die Anlage **dadurch gekennzeichnet ist, dass** sie Mittel (28; 44) zur Blockierung der Speichertrommel (24), um die Speichertrommel (24) an der Drehung um ihre Achse zu hindern, und Mittel (30; 32) zum Abwickeln des auf die Speichertrommel (24) aufgewickelten, die Lichtleitfasern (14) enthaltenden Schlauchs (12) an einem Ende der Speichertrommel (24) aufweist, um den die Lichtleitfasern (14) enthaltenden Schlauch (12) zum Ziehstein (10) zu führen, damit dem Schlauch (12) eine Längsverwindung verliehen wird, die den in ihm enthaltenen Lichtleitfasern (14) eine schraubenlinienförmige Strecke aufzwingen, deren Steigung im Wesentlichen gleich der Länge einer Windung des die Lichtleitfasern (14) enthaltenden, auf die Speichertrommel (24) aufgewickelten Schlauchs (12) ist.

3. Anlage (26) nach Anspruch 2, wobei der die Lichtleitfasern enthaltende Schlauch (12) um eine geometrische Achse (X), die Achse (X) der Speichertrommel genannt wird, auf die Speichertrommel (24) gewickelt ist, wobei die Abwicklungsmittel (30; 32) des Schlauchs (12) Führungsmittel (30) aufweisen, die um eine geometrische Achse drehbar montiert sind, die im Wesentlichen mit der Achse (X) der Speichertrommel (24) zusammenfällt.

4. Anlage (26) nach Anspruch 3, wobei die Führungsmittel (30) eine bewegliche Scheibe (34) aufweisen, die an einem Ende der Speichertrommel (24) um die Achse (X) der Speichertrommel (24) drehbar montiert ist, um eine drehbare Wange der Speichertrommel (24) zu bilden, wobei der Schlauch (12) auf dem Umfangsrand der beweglichen Scheibe (34) aufliegt.

5. Anlage (26) nach Anspruch 4, die eine ortsfeste Scheibe (40) mit einer drehsymmetrischen Achse aufweist, die mit der Achse (X) der Speichertrommel (24) zusammenfällt, und bei der Reibungsmittel (42) auf dem Umfangsrand einer ortsfesten Scheibe (40) vorgesehen und dazu bestimmt sind, mit einem Teil des Schlauchs (12) zusammenzuwirken, der sich bezüglich der Abwickelrichtung des Schlauchs (12) hinter der beweglichen Scheibe (34) befindet, um die Drehung der beweglichen Scheibe (34) zu bremsen.

6. Anlage (26) nach Anspruch 5, wobei die Reibungsmittel (42) radiale Borsten oder Fasern aufweisen.

7. Anlage (26) nach Anspruch 3, wobei die Führungsmittel (30) eine Abwickelscheibe (52) aufweisen, die drehbar um eine Achse montiert ist, die im Wesentlichen mit der Achse (X) der Speichertrommel (24) zusammenfällt, und die einen Abwickelarm (54) trägt, der sich in Längsrichtung im Wesentlichen parallel zur Achse (X) der Speichertrommel (24) erstreckt, radial bezüglich der Achse (X) der Speichertrommel (24) versetzt ist, damit der Abwickelarm (54) um die Speichertrommel (24) dreht.

8. Anlage (26) nach Anspruch 7, wobei ein Führungszylinder (56) drehbar auf den Abwickelarm (54) montiert ist, wobei der die Lichtleitfasern (14) enthaltende Schlauch auf der Umfangsfläche des Führungszylinders (56) aufliegt.

9. Anlage (26) nach Anspruch 7 oder 8, wobei die Abwickelscheibe (52) Mittel (66, 68) zum Umlenken des die Lichtleitfasern (14) enthaltenden Schlauchs (12) vom Abwickelarm (54) zu einer Durchlassöffnung (64) des die Lichtleitfasern (14) enthaltenden Schlauchs (12) trägt, die in der Abwickelscheibe (52) ausgebildet ist, wobei die Durchlassöffnung (64) im Wesentlichen mit der Achse (X) der Speichertrommel (24) fluchtet.
